# NEW EUROPEAN PATENT SPECIFICATION

(11) **EP 0 789 490 B2**
(45) Date of publication and mention of the opposition decision: **04.03.2009**
(45) Mention of the grant of the patent: 09.08.2000
(21) Application number: 97102159.7
(22) Date of filing: 11.03.1992
(51) Int. Cl.: H04N 7/088

(54) **Teletext transmissions receiver**
Teletextempfänger
Récepteur de télétexte

(30) Priority: 15.03.1991 IT TO910185
(43) Date of publication of application: 13.08.1997
(62) Divisional of application: 92104147.1
(73) Proprietor: EDICO S.r.l., 00196 Roma (IT)
(72) Inventor: Dini, Roberto, 10098 Rivoli (TO) (IT)
(74) Representative: Eisenführ, Speiser & Partner

(56) References cited:
- EP-A- 0 037 077
- EP-A- 0 264 565
- EP-A- 0 290 000
- EP-A- 0 406 972
- DE-A- 3 540 774
- DE-A- 3 622 308
- US-A- 4 837 620
- NTZ NACHRICHTENTECHNISCHE ZEITSCHRIFT, vol. 42, no. 11, 30 November 1989, BERLIN DE, pages 724-727, XP000072917 JG: "TOP macht Fernsehtext benutzerfreundlich"
- RUNDFUNKTECHNISCHE MITTEILUNGEN, vol. 31, no. 2, 30 April 1987, NORDERSTEDT DE, pages 83-93, XP002031354 EITZ G. ET AL: "TOP - EIN VERFAHREN ZUR VEREINFACHTEN ANWAHL VON FERNSEHTEXT-TAFELN DURCH DEN ZUSCHAUER"

## Description

The present invention relates to a teletext transmissions receiver, under the form of a plurality of pages, inserted in the television signal, that can be of the static type, that is single pages, or of the multifile type, each being made up of a plurality of sub-pages, that are substituted in time in the cycle and are also called rolling pages, comprising means for receiving and demodulating the television signal, and decoding means for extracting the associated teletext signal and selection means for selecting a chosen page from those transmitted, and memory means for storing at least one chosen teletext page.

There are teletext transmission receivers known having the above mentioned characteristics.

As known the major problem arising from teletext reception is the inconvenience that characterises the selection of the desired pages to be consulted.

There has been gradual progress in minimizing in part such inconveniences; various modified teletext transmission systems have been proposed (FLOP system, TOP system, as disclosed in RTM, Year 31 (1987), No. 2, pages 83 to 92 and NTZ, Vol. 42 (1989), No. 11, pages 724 to 727 etc.); ever increasing sophisticated decoders have been developed. However one of the major problems is that of the so called rolling pages; these are actually real folders of sub-pages, in varying numbers from 2 to 16; all the sub-pages carry the same page number: in reality the page number identifies the multifile and not the single sub-page; therefore it is not possible to directly select a single sub-page (i.e. giving a command that allows for the immediate availability without having to attend that the other sub-pages of the multifile be received, existing between that being transmitted in that moment of the cycle by the transmitter and that desired by the user); it is known that the single sub-pages are substituted one by one in the transmission cycle at determined intervals, for instance every 20 seconds. As an example, with reference being made to the Italian teletext, called Televideo by the RAI. It has been supposed that page 677 has been selected, that is a multifile-page of 6 sub-pages. The moment in which the page is acquired by the decoder the sub-page 2 is being transmitted; after approximately 20 seconds it is substituted with sub-page 3; after a further 20 seconds with sub-page 4 and so on.

The user is in a position of having just started to read the sub-page 2, that is then substituted (this substitution takes place even more quickly if the rolling page has not been directly called, but re-called from a memory); sub-page 3 has to be read, then 4, then 5 then 6, and then, finally, sub-page 1 and then 2, that he was not able to read at the beginning. It is true that with the use of the STOP key (or HALT) it is possible to stop the rolling; but when the STOP key is released, the sub-page that is present in that moment of the cycle is acquired; it would occur that, if the user had held sub-page 2 at the beginning of this hypothetical example, after having released the procedure he would find himself with sub-page 4 or 5; the remedy in this case is therefore worse than the problem.

The problem is accentuated by the fact that the majority of pages are of the multifile type: with Televideo more than two thirds of the pages are multifiles and less than a third being static pages.

As mentioned there are multifiles made up of 16 sub-pages, that requires 5-6 minutes for all of them to be displayed, and plans are being made to increase the maximum number of sub-pages of a multifile; it is not to be overlooked that sometimes only a single sub-page is of interest to the user (for instance in the case of train time-tables, or the weather forecast).

The extreme inconveniences of such a situation are more than evident. It has been proposed (note the article "Teletext Multi-page System mit TPU 2700", Elektronik, vol. 34, N.12, 14-6-1985) that in cases where the user selects a multifile-page, the decoder automatically provides for the relative sub-page to be memorised (up to maximum of 7), as soon as they are received; said memorised sub-pages can be "glanced through" by the user.

However even the system described in the article presents various inconveniences:
- being as the memory is of 8 pages in whole, the fact of occupying 7 for the sub-pages prevents the possibility of keeping in the memory the other pages normally memorised, such as the following page, the index page of the successive group, the index page of the successive block, and so on;
- the proposed system cancels from the memory the sub-pages already seen by the user (so as to make place for others); thus preventing the "backward glancing" of the sub-pages so as to re-read something already seen (for example in the case of the train time-table, as on a determined line only a few trains are used, it may be of interest to observe the situation on an alternative line for arriving at the same destination);
- the consulting speed is limited by the intervening time between the transmission of one sub-page and the successive (20 seconds); if the first 5 sub-pages are not of interest , it is necessary to attend 100 seconds before the sixth is displayed.
- and finally the system described in the article, that acquires a new page upon receiving the "clear page" signal, should fill the whole memory even if the rolling pages are only two, and not, however be able to ascertain the number of the sub-page acquired and therefore, for example, not know which is page 1, which is page 2 and so on.

Certainly this system is not therefore the best for the user; and the invention is based on the acknowledgement of this fact. The aim of the present invention is to indicate a more flexible teletext transmissions receiver than those known, able to avoid or to minimise the mentioned inconveniences, in relation to consulting the rolling pages, providing a remedy for a real set back of the actual teletext system.

The object of the present invention is achieved by the receiver defined in claim 1.

Further aims and advantages of the present invention will become clear from the following detailed description and from the annexed drawings supplied as a non-limiting example, wherein:
- figure 1 schematically represents part of the electrical circuit of a teletext transmissions receiver;
- figure 2 schematically represents a significant part of the logic circuit of the control unit 48 of figure 1;
- figure 3 schematically represents a second significant part of the logic circuit of the control unit of figure 1.

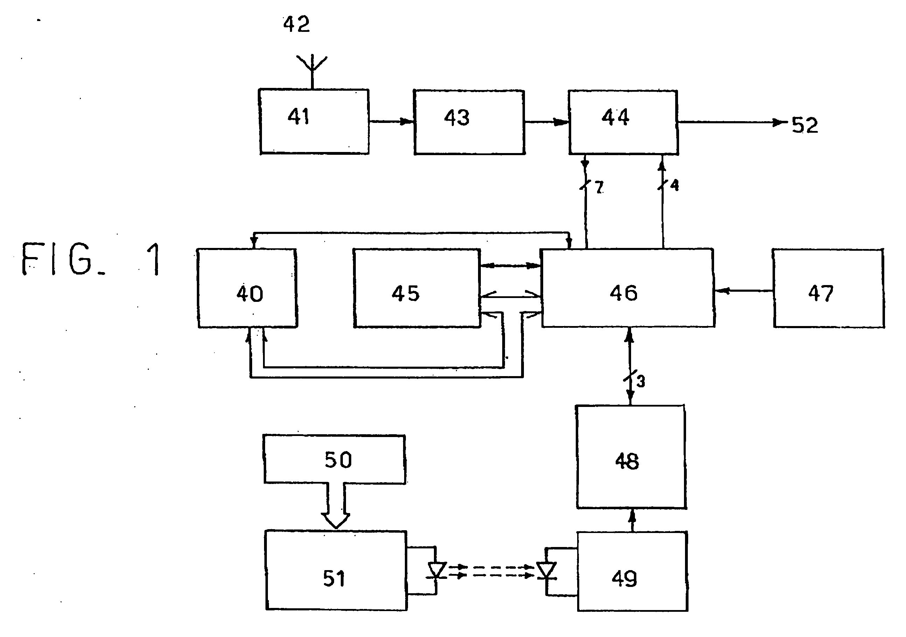

In figure 1 reference number 42 indicates a receiving antenna, connected to a television receiver for picking up the television signals transmitted, containing the teletext signals. Said antenna is connected to a conventional tuner, indicated with the reference number 41; an intermediate frequency signal amplifier follows said tuner, also of the conventional type, indicated with number 43.

The amplifier 43 supplies at its exit the composite video signal and is connected to a circuit amplifier and video signal processor indicated with the reference number 44; the processor circuit 44 can be of the VCU 2133 type for example made by Hitachi, which also executes the analogue-digital conversion and the digital -analogue re-conversion of the signal; at the output (reference number 52) of circuit 44 the three signals RGB (red, green, blue) are available for the image display device (for instance a colour television screen, not represented in the figures).

The processing circuit 44 is connected, by means of two multiwire connectors, to a decoding circuit of teletext signals, indicated with the reference number 46; such circuit 46 can be of the TPU 2732 type by ITT, or an equivalent circuit by another producer.

The decoding circuit 46 comprises:
- a data acquisition unit, that receives the digitised input video signal, coming from circuit 44;
- a RAM memory that serves as a buffer of the teletext page to be displayed;
- a control unit of the eight page external memory 45;
- a character generator and a control circuit of the display;
- a timing unit, that receives the clock signal from the clock circuit generator, indicated with the reference number 47, that may be of the MCU 2632 type for example, by ITT;
- an interface for the bus coming from the central control unit 48.

The acquisition of the teletext data starts in line 7 and finishes at line 22; the teletext information is synchronised and identified; a comparator, pre-selects the pages whose numbers have been called by the control unit 48 and inserts them in the memory 45; the internal memory is used as a buffer.

The display of the teletext page starts on line 48 and finishes on line 286; the decoder selects one of the eight pages in the memory for the display; the words of 8 bits (characters) are transformed into a 6x10 point matrix by the character generator and are displayed in 24 lines of 40 characters each.

Circuit 46 receives commands from unit 48 through an appropriate bus.

The external memory 45 of 64 Kbits is organised into 8 sectors of 8 Kbits each; each sector is organised into 25 lines of 40 bytes each, plus a line of 24 bytes; the lines 0-23 represent the 24 lines of the teletext page to be displayed; line 25 of every sector is used for the information control of the relative sector, while line 24 of sector zero and one respectively contain general control information and the rolling header. The central control unit, indicated with the reference number 48, can be of the CCU 2030 type for example, by ITT, or another logic control circuit comprising a similar microprocessor and an appropriate operative instruction program.

Said central control unit, apart from circuit 46, is also connected to an amplifying circuit, indicated with the reference number 49, that works as a receiver of infra-red rays' signals, coming from a remote control device, indicated with the number 51; this is connected to a command keyboard, indicated with the reference number 50.

The commands given by the user, by means of keyboard 50, by means of the transmitter 51 and the receiver 49, arrive at the control unit 48, that provides for the decoding of said commands and to supply the appropriate control signals to the circuit 46.

In the case that the receiver of figure 1 were similar to what has been described in the cited article, in the case of selecting a multifile-page, as page 677 of the RAI Televideo, for returning to the first, the decoder would gradually provide for memorising the sub-pages 2, 3, 4, 5, 6, and 1 in the memory 45.

The user would however have to attend for 100 seconds before being able to see page 1; if he had initially chosen another, for instance 2, the decoder would cancel it the moment that another is selected, for example 1. If the multifile-page 190 is selected, of the Televideo, that has 16 sub-pages, a maximum of only 7 could be memorised; and therefore, so as to view a determined sub-page, it could be necessary to attend for up to 5 minutes.

According to the invention, a second external memory is proposed to be added, indicated in the figure with the reference number 40, having a capacity of at least 200 pages (for instance a read write memory (DRAM) of 2 megabit, of 256 teletext pages), this also being connected to the decoder 46.

It is to he noted for example that the teletext decoding circuit of the MV 1815 type by Plessey can be associated to an external memory of the DRAM type of various capacities, up to 256x4 Kbit each.

According to the invention, as always in the case of the RAI Televideo, the decoder 46, on orders by the control unit 48, will provide for, upon the moment that the receiver has been switched on, and even without the necessity of selecting the teletext mode, to gradually acquiring and memorise in the memory 40 all the sub-pages belonging to the first three blocks of pages (100-199 News, 200-299 Sport, 300-399 Economy and Finance); such sub-pages amount to around one hundred and can therefore easily be stored in the memory 40.

Upon the act of acquisition the decoder is able to tell whether the page is a rolling page (or whether it is part of a multifile), of how many pages the multifile is made up of and what is the number of that particular sub-page; this data is contained in two byte, contained in the line 1 of the page that defines "the rolling index", or the sub-page number, followed by the total number of sub-pages of the multifile (for example 11/16 if the case is the sub-page 11 of a multifile composed of 16 pages); this data is also that displayed; furthermore, in the RAI Televideo, the number of the sub-page (11) is also contained in line zero, that is in the page heading, that is not displayed.

Even being limited to this number (11), contained in the heading, it is possible to memorise the sub-pages in order, so as to be able to presented upon request; even not previously knowing the number (16) of sub-pages comprising the multifile, the decoder is aware of having terminated upon finding the same sub-page number again.

Alternatively, instead of memorising the first three blocks of pages, it could be provided for, upon switching on the receiver, the memorising of the sub-pages of determined blocks preferred by the user, not being necessarily contiguous, selected from those appearing in the general index; with this aim the command organ 50 can be provided with a memory key, that the user would have to depress after having selected the page index of the block that be desires to memorise. The memorising of numbers of preferred blocks would be advantageously carried out in a non-volatile type memory (EAROM) and would therefore remain as a permanent instruction, even in cases of the set being switched off; the set would accept memory commands of other blocks, and the memory operation of the pages in memory 40 would be organised in such a way that, when its capacity has been completely utilised, new requests for memorising will be accepted but the numbers of previous preferred blocks be cancelled.

When the user selects the teletext mode and selects a page, the decoder, apart from memorising, as normal, in the memory 45, the following page in relation to that selected, the group and successive block indexes, etc., will also provide for, if the page selected is a multifile belonging to one of the first three blocks, addressing the memory 40 so that the sub-page N°1 of the particular chosen multifile -page be directly displayed; furthermore it will be pre-dispose the "next page" and "previous page" keys to respectively select the sub-pages, N°2 and the last of the multifile. As soon as the user depresses the "next page" key the sub-page N°2 will be displayed, and the "next page" and the "previous page" keys will be pre-disposed to respectively select the sub-pages N°3 and N°1; and so on.

If the user were to select a page of an other block (400-499 weather forecasts and transport; 500-599 Shows; 600-699 Various or 700-799 Work), the decoder could provide to display a warning sign for the user, of the type "the selected page has not been memorised; please wait" and then immediately provide for acquiring and memorising in the memory 40 the sub-pages of all the multifiles of the block (approximately 200 sub-pages for blocks 4, 5 and 6 and approximately 120 for the block 7); and then it will act as described above for the case of the three initial blocks.

In such a way the user will have immediate access, in every case, to any sub-page of any multifile of the three initial blocks; and will also have access to any sub-page of any multifile of one of the other blocks as soon as the decoder has finished memorising the relative sub-pages.

So as to accelerate the memorising the decoder is able to carry out a parallel acquisition of a certain number of multifiles; and in each case priority will be granted to the multifile requested, so that in the worst of cases the maximum period of time needed will be equal to that of the known system; but having the great advantage that every multifile will then be accessible starting from the sub-page N°1 and the others will be available in order and without any delay.

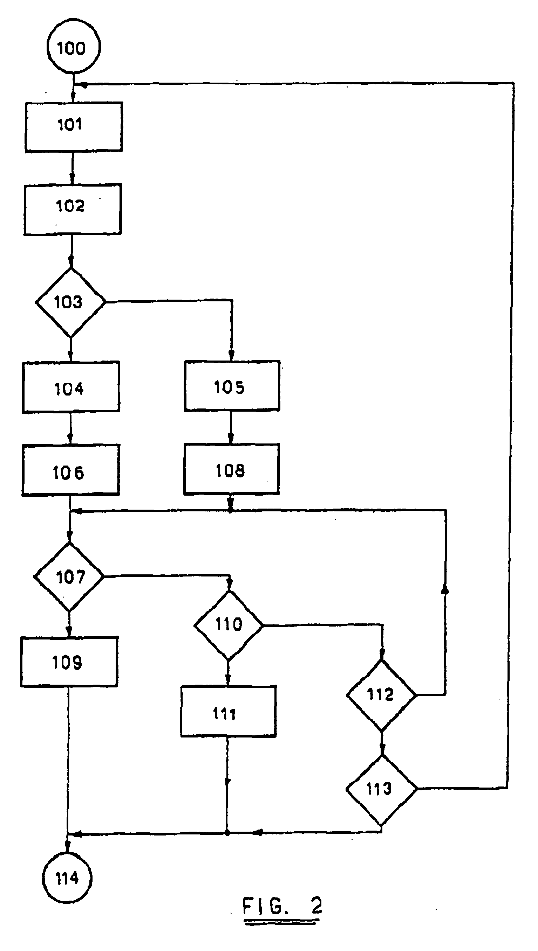

In figure 2 a part of the logic circuit of the central control unit 48 is schematically represented, that allows for the realisation of what has been previously described.

Such circuit may be either realised with the wired logic system or with the system of programmed logic, i.e. utilising a microprocessor; said second system is generally less expensive ,also as normally televisions and video recorders are already provided with one or more microprocessors.

Block 100 is the block of the beginning of the operation of memorising the sub-pages of the block to which the page selected by the user belongs; control then passes to the successive block 101.

Block 101 provides for the acquisition of the number of the page chosen by the user (for instance the number could be compiled on the keyboard of the remote control unit 50); we may suppose that the number is 677. Control passes to the successive block 102.

Block 102 provides to determine the block to which the chosen page belongs; in this case we are concerned with block 600-699; the block 102 also provides for giving the command to the decoder 46 to acquire and memorise (in the memory 40) all the sub-pages of the multifiles whose number falls between 600 and 699, priority however is given to the page requested 677 (it may be supposed for example that the decoder is able to acquire 4 parallel pages: one of which must be that having precedence, page 677, be it a multifile or a static page). Control then passes to the successive block 103.

Block 103 is a control block; it controls whether the chosen page is static; in the affirmative case control passes to block 104; in the negative case control passes to block 105 (in all the control blocks the, inferior output is the YES output; whereas the lateral output is the NO output).

Block 104 provides for giving the command to the decoder 46 to display the required page as soon as it has been acquired, and passes control to the block 106.

Block 106 provides to predispose the "next page" key to select, from the memory 45, the successive page to that requested; and the "previous page" key to select, from the same memory, the previous page to that requested. Control passes to block 107.

Block 105 provides for giving the command to the decoder 46 to display the sub-page N°1 of the requested multifile (677) as soon as it has been acquired, and passes the control to block 108.

Block 108 provides to predispose the key "next page" to select, from the memory 40, the sub-page N°2; and the "previous page key to select, from the same memory, sub-page N°6 (the last) of the multifile 677 requested. Control passes to block 107.

Block 107 is a control block; it controls whether the "next page" on the remote control unit 50 has been depressed; in the affirmative case control passes to block 109; in the negative case control passes to block 110.

Block 109 provides for giving the command to the decoder 46 to select and display, from the suited memory, the page by the "next page" key and to consequently move the associated to the "next page" and "previous page" keys, Control passes to block 114.

Block 112 is a control block; it controls whether a command has been made out on the remote control unit 50 different from the "next page" or "previous page" command; in the affirmative case control passes to block 113; in the negative case control returns to block 107.

Block 113 is a control block; it controls whether a command has been made out on the remote control unit 50 different than a new page number; in the affirmative case control passes to block 114; in the negative case control returns to block 101.

Block 114 is the terminal block of the end of the operation; control can return to the initial block 100 or to another similar operative block of the control circuit.

In the circuit described in figure 2 it has been assumed that the operation of memorising the sub-pages of the block has been carried out by an explicit page selection on behalf of the user, made out on the remote control unit 50. It is however, as previously mentioned, favourable to provide that the control unit 48 is predisposed to carry out the said operation automatically, for the first three Televideo page blocks as soon as the teletext mode has been selected by the user, or even, upon turning on the receiver.

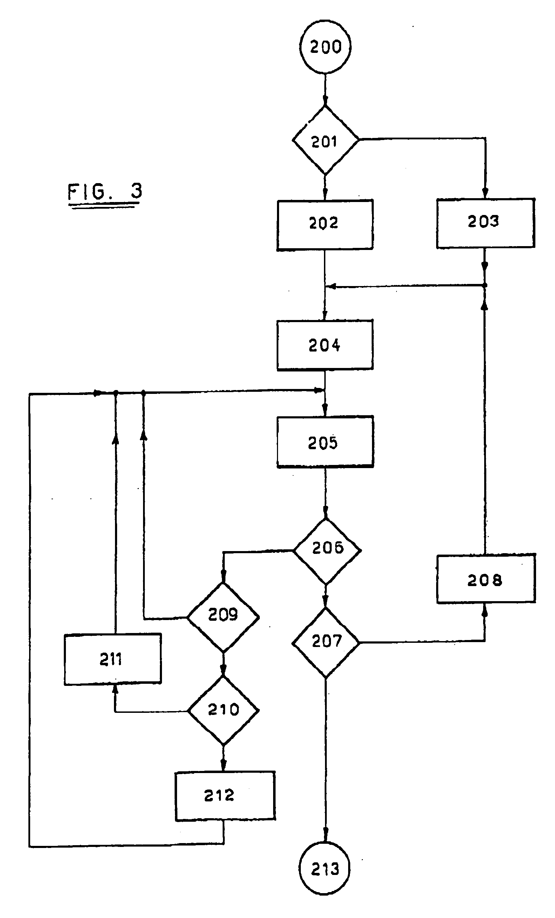

In figure 3 a second part of the logic circuit of the central control unit 48 is schematically represented that allows for realising such initial automatic memorising.

Block 200 is the starting block of the automatic memorising operation; block 200 passes control to the successive block 201.

Block 201 is a control block; it controls whether in the appropriate non-volatile memory the numbers of the blocks preferred by the user have been memorised; In the affirmative case control passes to block 202; in the negative case control passes to block 203.

Block 202 reads the number of the first preferred block and passes it to block 204 to which it hands over the control.

Block 203 writes in the non-volatile memory the numbers of the first three blocks (100-200-300); the number of the first block (100) then passes to block 204.

Block 204 waits to receive the data of the first pages of the block of which it has received the number; control passes to block 205.

Block 205 reads the page transmitted; if it is a rolling page it becomes memorised in the memory 40, and also memorises in an appropriate table, the relative address to enable it to be found later; control passes to block 206.

Block 206 is a control block; it controls whether the received page is the last of the block; in the affirmative case control passes to block 207; in the negative case control passes to block 209.

Block 207 is a control block; it controls whether the block being memorised is the last of the list; in the affirmative case control passes to 213; in the negative case control passes to block 208.

Block 208 reads the number of the successive block on list and returns the control to block 204.

Block 209 is a control block; it controls whether the user has requested a teletext page; in the affirmative case control passes to block 210; in the negative case control passes to block 205.

Block 210 is a control block; it controls whether the page requested by the user has already been memorised; in the affirmative case control passes to block 212; in the negative case control passes to block 211.

Block 211 displays an informative message on the screen, of the type: "the page requested is not yet available; please wait". Control then returns to block 205.

Block 213 is the end of operation block; control passes to another operative block of the system, for example to the initial block 100 of figure 2.

It could occur that the number of sub-pages being present in a page block exceed the capacity of the memory 40; in such a case the control unit can be predisposed to memorise all those possible (for example those corresponding to the first 50 pages of the block), and duly memorise the others in the moment in which a page being of the second half of the block is requested.

It is however favourable to provide for an automatic updating at pre-established intervals (for instance every fifteen minutes) of the memorised sub-pages, so as to avoid that variations be registered (for instance in the case of the news pages).

Such automatic updating can be favourably provided for even during the stand by of the receiver, as far as the teletext data associated to the last television channel selected is concerned and to which a system of teletext data is associated; for this a memory that conserves the relative data is needed (last teletext selected).

Alternately, the possibility for the user to indicate a preferred program could also he provided, from which the teletext data is drawn when the receiver is in stand by.

Another useful characteristic is that of foreseeing what should happen in the case of a program change; various cases can be foreseen:
- if the user commutates from a program with teletext to a program without teletext, the system holds the teletext data in memory until that moment;
- if the user commutates from a program with teletext to a program with a different teletext, the system cancels the memory and acquires the new data;
- it is however wise to provide the user with the possibility to inhibit the cancellation of the acquired data, as the commutation could be temporary; for this an appropriate sequence can easily be provided; without having to add an appropriate key, it could be provided that the user, in the case that he desires to block the cancellation and new acquisition, has to first pass from the teletext to the video of the same program, depress the stop key and then consequently change program; depressing the stop key a second time would reactive the normal acquisition data function.

The characteristics of the receiver of teletext transmissions described result in being clear from the present description and annexed drawings.

From the present description the advantages of the receiver of teletext transmissions object of the present invention also result in being clear.

In particular they consist in the fact that consulting the sub-pages of a selected multifile is made a lot easier, faster and reliable for the user.

It is clear that the receiver of teletext transmissions described is more flexible than those known; it is also clear that numerous variants are possible by the man skilled in the art, to the receiver of teletext transmissions described as an example, without however departing from the novelty principle inherent in the invention.

For example the memorising of the sub-pages in the memory 40 could be still be carried out for the 100 (or other suitable number) previous sub-pages in the cycle of the chosen page and for the following 150 (or other suitable number), independently from the dimension of the block in which the chosen page is to be found.

Furthermore the memory of the normal pages (45) could be incorporated in the memory (40) for the sub-pages.

Finally the memory 40 for the sub-pages could be provided with a greater capacity, for example 8 Megabit, so as to enable, without difficulty the memorising of all the rolling pages of the cycle. Such memory could obviously consist of a sole memory of 8 megabyte, or 4 memories of 2 Megabit each.

## Claims

1. Teletext transmission receiver, the teletext transmissions being under the form of a plurality of pages, inserted in a television signal, that can be of the static type, that is a single page, or of the multifile type, each being made up of a plurality of sub-pages that are substituted in time in the transmission cycle, comprising
- means (41, 42, 43) for receiving and demodulating the television signal,
- decoding means (46) for extracting the associated teletext signal,
- selection means (48, 50, 51) for selecting a chosen page (677) from those transmitted, said selection means having "next page" and "previous page" keys, and
- memory means (45) for memorising at least the content of one chosen teletext page,
**characterised by** the fact that
- said decoding means (46) are able upon the act of acquisition of said teletext signal to know whether the acquired teletext page is of a multifile type and of how many sub-pages the multifile page is made up of and what is the number of that particular sub page, said decoding means using data contained in two bytes which are contained in line 1 of the acquired page, said data being displayed and being the "rolling index" or the sub page number, followed by the total number of the sub pages of the multifile page, for example 11/16 if the case is the sub page 11 of a multifile page composed of 16 sub pages,
- the receiver comprises additional means (40, 101-113, 201-212) allowing for the direct selection of any memorised sub-page (1, 2, 3, 4, 5, 6) of a chosen multifile page (677), using the "next page" and "previous page" keys,
- the receiver comprises additional circuitry control means (102) that provide for memorising in an appropriate memory (40) a plurality of sub-pages, and
- the possibility is provided for the user to be able to memorise all the sub-pages of one or more preferred blocks by him selected, even if not in numerical order, the number of sub-pages being stored being made compatible with the capacity of said memory (40).

2. Teletext transmission receiver, according to claim 1, **characterised by** the fact that a memory key is provided, on said selection means (50), that has the purpose of carrying out the memorisation in said memory (40) of all the subpages of a selected block by means of its page index.

3. Teletext transmission receiver, according to claim 1, **characterised by** the fact that the receiver comprises means for displaying a warning sign for the user, when the selection and displaying of the selected page cannot be immediately performed.

4. Teletext transmission receiver, according to claim 3, **characterised by** the fact that said warning sign consists in displaying a message of the type: "The selected page has not been memorised, please wait.".

5. Teletext transmission receiver, according to claim 1, **characterised by** the fact that said circuitry control means (102) that provide for the memorising in an appropriate memory are provided for cancelling the memory and begin to acquire new data if from a program with teletext the user commutes to a program with a different teletext.

6. Teletext transmission receiver, according to claim 5, **characterised by** the fact that said circuitry control means (102) are provided for inhibiting the cancellation of the memorised data and the acquisition of new data, in the case that the user provides for sending a determined inhibiting command.

7. Teletext transmission receiver, according to claim 6, **characterised by** the fact that said determined inhibiting command consists in depressing the STOP key during the normal reception and display of video signals.

## Patentansprüche

1. Teletextübertragungs-Empfänger, wobei die Teletextübertragungen in der Form einer Mehrzahl von Seiten erfolgen, eingefügt in ein Fernsehsignal, die vom statischen Typ sein können, d.h., eine einzelne Seite, oder vom Mehrfachdatei-Typ, wobei jede aus einer Mehrzahl von Unter-Seiten aufgebaut ist, die zeitlich in dem Übertragungszyklus ersetzt werden, mit
- einer Einrichtung (41, 42, 43) zum Empfangen und Demodulieren des Fernsehsignales.
- einer Dekodierungseinrichtung (46) zum Extrahieren des zugeordneten Teletextsignales,
- einer Auswahleinrichtung (48, 50, 51) zum Auswählen einer gewählten Seite (677) aus den gesendeten, wobei die Auswahleinrichtung "Nächste Seite"- und "Vorherige Seite"-Tasten aufweist, und
- einer Speichereinrichtung (45) zum Speichern von wenigstens dem Inhalt einer gewählten Teletextseite,
**dadurch gekennzeichnet, dass**
- die Dekodierungseinrichtung (46) nach dem Erfassungsvorgang des Teletextsignales in der Lage ist, zu wissen, ob die erfasste Teletextseite von einem Mehrfachdatei-Typ ist, aus wie vielen Unter-Seiten die Mehrfachdatei-Seite aufgebaut ist, und welche die Nummer der bestimmten Unter-Seite ist, wobei die Dekodierungseinrichtung Daten verwendet, die in zwei Bytes enthalten sind, welche in der Zeile 1 der erfassten Seite enthalten sind, wobei die Daten angezeigt werden und den "Rollindex" oder die Nummer der Unter-Seite, gefolgt von der Gesamtzahl der Unter-Seiten der Mehrfachdatel-Seite, angeben, zum Beispiel 11/16 wenn Unter-Seite 11 einer aus 16 Unter-Seiten gebildeten Mehrfachdatei-Seite auftritt,
- der Empfänger eine zusätzliche Einrichtung (40, 101-113, 201-212) umfasst, welche eine direkte Auswahl jeder gespeicherten Unter-Seite (1, 2, 3, 4, 5, 6) einer gewählten Mehrfachdatei-Seite (677) unter Verwendung der "Nächste Seite"- und "Vorherige Seite"-Tasten gestattet,
- der Empfänger eine zusätzliche Schaltungs-Steuerungseinrichtung (102) umfasst, die das Speichern einer Mehrzahl von Unter-Seiten in einem geeigneten Speicher (40) ermöglicht, und
- die Möglichkeit vorgesehen ist, dass der Benutzer in der Lage ist, sämtliche Unter-Seiten von einem oder mehreren bevorzugten, von ihm ausgewählten Blöcken zu speichern, auch wenn sie nicht in nummerischer Reihenfolge sind, wobei die Anzahl der gespeicherten Unter-Seiten kompatibel mit der Kapazität des Speichers (40) gemacht wird.

2. Teletextübertragungs-Empfänger nach Anspruch 1,
**dadurch gekennzeichnet, dass** eine Speichertaste auf der Auswahleinrichtung (50) vorgesehen ist, die den Zweck hat, die Speicherung sämtlicher Unter-Seiten des ausgewählten Blockes durch ihren Seitenindex in dem Speicher (40) auszuführen.

3. Teletextübertragungs-Empfänger nach Anspruch 1,
**dadurch gekennzeichnet, dass** der Empfänger eine Einrichtung zum Anzeigen eines Warnzeichens für den Benutzer, wenn die Auswahl und die Anzeige der ausgewählten Seite nicht sofort ausgeführt werden kann, umfasst.

4. Teletextübertragungs-Empfänger nach Anspruch 3,
**dadurch gekennzeichnet, dass** das Warnzeichen aus dem Anzeigen einer Mitteilung des Typs: "The selected page has not been memorised, please wait." ("Die ausgewählte Seite wurde nicht gespeichert, bitte warten.") besteht.

5. Teletextübertragungs-Empfänger nach Anspruch 1,
**dadurch gekennzeichnet, dass** die Schaltungs-Steuerungseinrichtung (102), welche das Speichern in einem geeigneten Speicher ermöglicht, vorgesehen ist zum Löschen des Speichers und zum Beginnen der Erfassung neuer Daten, wenn der Benutzer von einem Programm mit Teletext zu einem Programm mit einem anderen Teletext wechselt.

6. Teletextübertragungs-Empfänger nach Anspruch 5,
**dadurch gekennzeichnet, dass** die Schaltungs-Steuerungseinrichtung (102) vorgesehen ist zum Verhindern der Löschung der gespeicherten Daten und der Erfassung neuer Daten für den Fall, dass der Benutzer einen bestimmten Verhinderungsbefehl sendet.

7. Teletextübertragungs-Empfänger nach Anspruch 6,
**dadurch gekennzeichnet, dass** der bestimmte Verhinderungsbefehl im Drücken der STOP-Taste während des normalen Empfangs und der Anzeige von Videosignalen besteht.

## Revendications

1. Récepteur de transmission télétexte, les transmissions télétexte étant sous la forme d'une pluralité de pages, insérées dans un signal de télévision, qui peuvent être du type statique, lequel est une page unique, ou du type à fichiers multiples, chacun étant constitué d'une pluralité de pages secondaires qui sont remplacées au fil du temps dans le cycle de transmission, comprenant :
des moyens (41, 42, 43) pour recevoir et démoduler le signal de télévision,
des moyens de décodage (46) pour extraire le signal télétexte associé,
des moyens de sélection (48, 50, 51) pour sélectionner une page choisie (677) parmi celles transmises, lesdits moyens de sélection comprenant des touches « page suivante » est « page précédente », et
des moyens de mémorisation (45) pour mémoriser au moins le contenu d'une page télétexte choisie,
**caractérisé en ce que :**
lesdits moyens de décodage (46) sont capables, à l'acquisition dudit signal télétexte, de savoir si la page télétexte acquise est d'un type à fichiers multiples et de connaître le nombre de pages secondaires constituant la page de fichiers multiples, et le numéro de cette page secondaire particulière, lesdits moyens de décodage utilisant des données contenues dans deux octets qui sont contenus dans la ligne 1 de la page acquise, lesdites données étant affichées et étant le « catalogue tournant » ou le numéro de page secondaire, suivi du nombre total de pages secondaires de la page du fichier multiple, par exemple 11/16 dans le cas de la page secondaire 11 d'une page de fichiers multiples composée de 16 pages secondaires,
le récepteur comprend des moyens supplémentaires (40, 101 à 113, 201 à 212) permettant la sélection directe d'une quelconque page secondaire (1, 2, 3, 4, 5, 6) mémorisée d'une page de fichiers multiples (677) choisie, en utilisant les touches de « page suivante » et de « page précédente »,
le récepteur comprend des moyens de commande de circuit supplémentaires (102) permettant la mémorisation dans une mémoire appropriée (40) d'une pluralité de pages secondaires, et
la possibilité est fournie à l'utilisateur de mémoriser l'ensemble des pages secondaires d'un ou de plusieurs blocs préférés qu'il a sélectionnés, même si elles ne sont pas dans l'ordre numérique, le nombre de pages secondaires stockées étant compatible avec la capacité de ladite mémoire (40).

2. Récepteur de transmission télétexte selon la revendication 1, **caractérisé en ce qu'**une touche de mémoire est fournie, sur lesdits moyens de sélection (50), permettant de réaliser la mémorisation dans ladite mémoire (40) de toutes les pages secondaires d'un bloc sélectionné au moyen de son indice de page.

3. Récepteur de transmission télétexte selon la revendication 1, **caractérisé en ce que** le récepteur comprend des moyens pour afficher un signe d'avertissement à l'utilisateur, quand la sélection et l'affichage de la page sélectionnée ne peuvent pas être réalisés immédiatement.

4. Récepteur de transmission télétexte selon la revendication 3, **caractérisé en ce que** ledit signe d'avertissement consiste à afficher un message du type : « La page sélectionnée n'a pas été mémorisée, veuillez attendre ».

5. Récepteur de transmission télétexte selon la revendication 1, **caractérisé en ce que** lesdits moyens de commande de circuit (102) qui assurent la mémorisation dans une mémoire appropriée sont fournis pour effacer la mémoire et commencer à acquérir de nouvelles données si, à partir d'un programme avec le télétexte, l'utilisateur passe à un programme avec un télétexte différent.

6. Récepteur de transmission télétexte selon la revendication 5, **caractérisé en ce que** lesdits moyens de commande de circuit (102) sont fournis pour empêcher l'annulation des données mémorisées et l'acquisition de nouvelles données, dans le cas où l'utilisateur envoie une commande d'empêchement déterminée.

7. Récepteur de transmission télétexte selon la revendication 6, **caractérisé en ce que** ladite commande d'empêchement déterminée consiste à enfoncer la touche STOP pendant la réception normale et l'affichage des signaux vidéo.
